# EUROPÄISCHE PATENTSCHRIFT

(11) **EP 3 684 654 B1**
(45) Veröffentlichungstag und Bekanntmachung des Hinweises auf die Patenterteilung: **29.04.2026**
(21) Anmeldenummer: 19728316.1
(22) Anmeldetag: 17.05.2019
(51) Int. Cl.: B60R 21/215

(54) **AIRBAGKLAPPE**
AIRBAG FLAP
CLAPET DE COUSSIN GONFLABLE DE SÉCURITÉ

(30) Priorität: 24.08.2018 DE 102018006704
(43) Veröffentlichungstag der Anmeldung: 29.07.2020
(73) Patentinhaber: RSW GmbH, 82327 Tutzing (DE)
(72) Erfinder: RORING, Albert, 48599 Gronau-Epe (DE); SCHULZE WEHNINCK, Rembert, 82327 Tutzing (DE)
(74) Vertreter: Cohausz Hannig Borkowski Wißgott
(86) Internationale Anmeldenummer: PCT/EP2019/000153
(87) Internationale Veröffentlichungsnummer: WO 2020/038596

(56) Entgegenhaltungen:
- DE-A1- 102004 010 643
- DE-A1- 102014 003 972
- DE-A1- 102016 225 033
- DE-U1- 202007 016 718

## Beschreibung

Die Erfindung betrifft eine Airbagklappe über der Durchtrittsöffnung eines Airbagschusskanals, wobei über der Airbagklappe eine Airbagabdeckung liegt und die Airbagklappe über eine Gelenkstelle mit einer Klappenstützwand angeformt verbunden ist, die an der Airbagabdeckung und/oder an einer Wand des Schusskanals befestigt ist, wobei die Airbagklappe und die Klappenstützwand aus demselben flachen Kunststoffmaterial insbesondere Verbundwerkstoff bestehen.

Eine solche Airbaganordnung ist aus der EP 2 727 775 A1 bekannt. Die Airbagklappe ist über eine Faltung mit der in den Schusskanal hineinreichenden Klappenstützwand verbunden, um beim Austreten des Airbagkissens durch die Airbagdurchtrittsöffnung hindurch der Airbagklappe einen zusätzlichen Weg zu geben. Ein weiterer Stand der Technik gemäss dem Oberbegriff des Anspruchs 1 ist aus der DE 10 2004 010643 A1 bekannt geworden.

Aufgabe der Erfindung ist es, für eine Airbagklappe eine weggebende Technik zu schaffen, die einfach in Konstruktion und Herstellung ist und wenig Platz benötigt.

Diese Aufgabe wird erfindungsgemäß dadurch gelöst, dass im Bereich der Gelenkstelle und/oder auf einer oder beiden Seiten der Gelenkstelle im flachen Kunststoffmaterial insbesondere im Verbundwerkstoff eine weggebende Struktur in Form von zahlreichen Schlitzen und/oder Öffnungen angeordnet ist, und hierdurch mindestens einen Streckbereich im Werkstoff in der Richtung schafft, in der die Airbagklappe durch das Airbagkissen nach außen hin bewegt wird.

Hierbei sind erfindungsgemäss die Schlitze oder Öffnungen Stanzungen, Schnitte oder Stanzschnitte.

Durch die in das Kunststoffflachmaterial eingebrachten Schlitze und/oder Öffnungen im Bereich oder nahe der Gelenkstelle der Airbagklappe ist das Flachmaterial streckbar, wenn beim Entfalten des Airbagkissens Zugkräfte auf die Airbagklappe einwirken. Das Flachmaterial liegt somit im geschnittenen/gestanzten Zustand ungestreckt vor, solange der Airbag nicht ausgelöst wurde. Erst nach dem Auslösen des Airbags wird das Material weggebend gestreckt und zu einem Öffnungen aufweisenden Streckmaterial. Besonders vorteilhaft ist hierbei, dass das geschnittene/gestanzte Flachmaterial im ungestreckten Zustand geringe Außenabmessungen aufweist und damit platzsparend ist. Auch ist es einfach und kostensparend herstellbar.

Durch Art, Ausrichtung, Dichte und Größe der Schlitze und/oder Öffnungen kann exakt bestimmt werden, bei welchen Kräften welche zusätzliche Wegstrecke(n) erreicht werden soll/sollen. Durch das Strecken der weggebenden Struktur entsteht eine Gitterstruktur insbesondere eine Rautenstruktur.

Vorzugsweise wird vorgeschlagen, dass die Airbagklappe und die Klappenstützwand aus einem Verbundwerkstoff besteht mit mindestens einer Lage aus Kunststoffbändern oder -fasern insbesondere aus thermoplastischem Polypropylen oder Polyester und mindestens einer darauf geschmolzenen Kunststofflage. Dabei können die Kunststoffbänder oder -fasern ein Gewebe bilden.

Ausführungsbeispiele der Erfindung sind in den Zeichnungen schematisch dargestellt und werden im Folgenden näher beschrieben. Es zeigen
- Fig. 1: einen Schnitt durch eine Airbagvorrichtung,
- Fig. 2 bis 5: Ansichten von weggebenden Strukturen in Blickrichtung nach Pfeil A und B in Fig. 1 im noch nicht gestreckten Zustand.

Die Airbaganordnung besitzt einen das Prallkissen 7 aufnehmenden Raum 12, der den Schusskanal bildet, von Schusskanalwänden 9 umgeben ist und von einer Abdeckung 2 verschlossen ist, die Sollbruchlinien 2a aufweist. Die Abdeckung 2 bildet eine Airbagdurchtrittsöffnung, wenn nach Auslösen des Prallkissens 7 die Abdeckung 2 an den Sollbruchlinien aufreißt und nach außen aufklappt. Hierbei bleibt die von der Abdeckung 2 gebildete Klappe mit einem Rand, das ein Gelenk 11 bildet, an der übrigen Abdeckung befestigt.

Die Abdeckung 2 ist von einer Schaumschicht 5 bedeckt, auf der außen ein dekoratives Oberflächenmaterial 6 aufliegt.

Auf der Unterseite der Abdeckung 2 ist mindestens eine Airbagklappe 1 befestigt, wobei die Abdeckung 2 auf die Airbagklappe 1 aufgespritzt ist. Das Material der Airbagklappe 1 und das Herstellungsverfahren sind in der EP 2 727 775 A1 beschrieben.

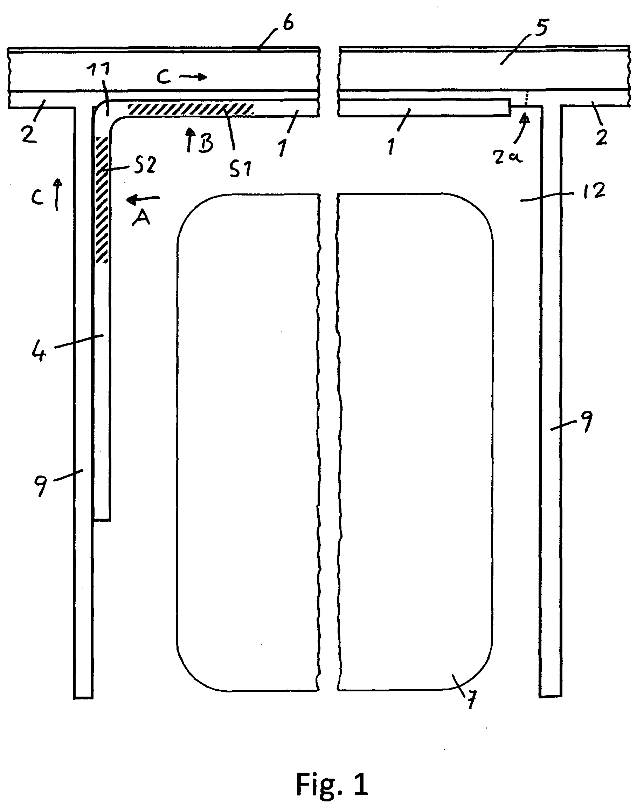

Die Airbagdurchtrittsöffnung ist, wie in Fig. 1 dargestellt, durch eine einzige Airbagklappe 1 verschlossen, die die Gelenkstelle 11 aufweist. Es können aber auch zwei Airbagklappen mit an gegenüberliegenden Seiten angeordneten Gelenkstellen angeordnet sein. Die Airbagklappe(n) ist/sind jeweils über die Gelenkstelle 11 an eine Klappenstützwand 4 angeformt, die sich in das Innere des Raums 12 und damit des Schusskanals erstreckt. Hierbei liegt die Klappenstützwand 4 an der Innenfläche der Schusskanalwand 9 an und ist an dieser befestigt.

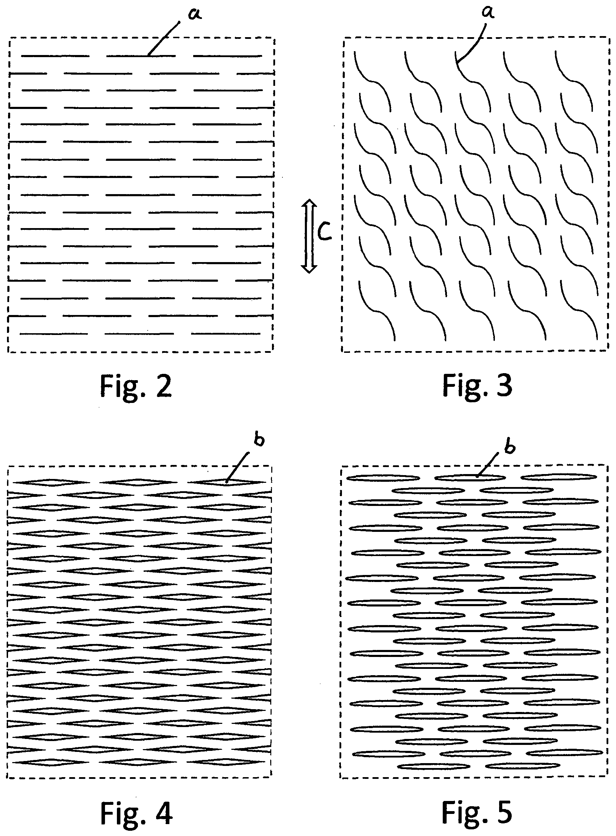

Die Airbagklappe 1 und/oder die an den Airbagklappen angeformte Klappenstützwand 4 weist/weisen nahe des Gelenks/der Gelenkstelle 11 und/oder im Gelenkbereich mindestens eine waagerechte Struktur S1 und/oder S2 im flachen Kunststoffmaterial insbesondere im Verbundwerkstoff auf. Hierzu sind im Flachmaterial der Airbagklappen 1 und/oder der Klappenstützwand 4 und/oder im Bereich des Gelenks 11 in regelmäßiger Anordnung und Abständen Schnittstellen a oder Öffnungen/Löcher b eingeschnitten oder eingestanzt, wie beispielsweise in den Fig. 2 bis 5 im noch nicht gestreckten Zustand dargestellt.

Wird das Airbagkissen ausgelöst, so drückt es beim Entfalten gegen die Airbagklappe(n), die nach außen verschwenkt/verschwenken, wobei auf die Airbagklappe(n) und oft auch auf die Klappenstützwand 4 Zugkräfte in der Flächenebene in Pfeilrichtung C entstehen, die das Material in Richtung C strecken, wodurch die Schnittstellen a durch sich Öffnen zu Öffnungen und die Öffnungen/Löcher b durch sich Vergrößern eine Verlängerung des Materials in Pfeilrichtung C ermöglichen, wobei eine Gitterstruktur insbesondere eine Rautenstruktur im Kunststoff insbesondere im Kunststoffverbundwerkstoff entsteht.

Die Airbagklappe 1 und die Klappenstützwand 4 bestehen aus einem Verbundwerkstoff mit mindestens einer Lage aus Kunststoffbändern oder -fasern insbesondere aus thermoplastischem Polypropylen oder Polyester und mindestens einer darauf geschmolzenen Kunststofflage. Hierbei bilden die Kunststoffbänder oder -fasern ein Gewebe.

## Patentansprüche

1. Airbagklappe über der Durchtrittsöffnung eines Airbagschusskanals, wobei über der Airbagklappe (1) eine Airbagabdeckung liegt und die Airbagklappe (1) über eine Gelenkstelle (11) mit einer Klappenstützwand (4) angeformt verbunden ist, die an der Airbagabdeckung (2) und/oder an einer Wand (9) des Schusskanals befestigt ist, wobei die Airbagklappe und die Klappenstützwand aus demselben flachen Kunststoffmaterial insbesondere Verbundwerkstoff bestehen, wobei im Bereich der Gelenkstelle (11) und/oder auf einer oder beiden Seiten der Gelenkstelle (11) im flachen Kunststoffmaterial insbesondere im Verbundwerkstoff eine weggebende Struktur (S1, S2) in Form von zahlreichen Schlitzen (a) und/oder Öffnungen (b) angeordnet ist, und hierdurch mindestens einen Streckbereich im Werkstoff in der Richtung (C) geschaffen ist, in der die Airbagklappe (1) durch das Airbagkissen (7) nach außen hin bewegt wird, **dadurch gekennzeichnet, dass** die Schlitze (a) oder Öffnungen (b) Stanzungen, Schnitte oder Stanzschnitte sind.

2. Airbagklappe nach Anspruch 1, **dadurch gekennzeichnet, dass** durch das Strecken der weggebenden Struktur (S1, S2) eine Gitterstruktur insbesondere eine Rautenstruktur entsteht.

3. Airbagklappe nach Anspruch 1 oder 2, **dadurch gekennzeichnet, dass** die Airbagklappe (1) und die Klappenstützwand (4) aus einem Verbundwerkstoff besteht mit mindestens einer Lage aus Kunststoffbändern oder -fasern insbesondere aus thermoplastischem Polypropylen oder Polyester und mindestens einer darauf geschmolzenen Kunststofflage.

4. Airbagklappe nach Anspruch 3, **dadurch gekennzeichnet, dass** die Kunststoffbänder oder -fasern ein Gewebe bilden.

## Claims

1. Airbag flap above the passage opening of an airbag chute, wherein an airbag cover lies above the airbag flap (1) and the airbag flap (1) is connected in a molded manner via a hinge (11) to a flap support wall (4), which is attached to the airbag cover (2) and/or to a wall (9) of the chute, wherein the airbag flap and the flap support wall consist of the same flat plastic material, in particular composite material, wherein in the area of the hinge (11) and/or on one or both sides of the hinge (11) in the flat plastic material, in particular in the composite material, a way-giving structure (S1, S2) in the form of numerous slits (a) and/or openings (b) is arranged, and thereby at least one stretching area is created in the material in the direction (C) in which the airbag flap (1) is moved outwards by the airbag cushion (7), **characterized in that** the slits (a) or openings (b) are punchings, cuts or punched cuts.

2. Airbag flap according to claim 1, **characterized in that** a grid structure, in particular a diamond structure is created by stretching the way-giving structure (S1, S2) creates

3. Airbag flap according to claim 1 or 2, **characterized in that** the airbag flap (1) and the flap support wall (4) consist of a composite material with at least one layer of plastic strips or fibers, in particular made of thermoplastic polypropylene or polyester, and at least one plastic layer melted onto it.

4. Airbag flap according to claim 3, **characterized in that** the plastic strips or fibers form a fabric.

## Revendications

1. Rabat d'airbag au-dessus de l'ouverture de passage d'une goulotte d'airbag, dans lequel un couvercle d'airbag se trouve au-dessus du rabat d'airbag (1) et le rabat d'airbag (1) est relié de manière moulée via une charnière (11) à une paroi de support de rabat (4), qui est fixée au couvercle d'airbag (2) et/ou à une paroi (9) de la goulotte, dans lequel le volet d'airbag et la paroi de support de volet sont constitués du même matériau plastique plat, en particulier d'un matériau composite, dans lequel, dans la zone de la charnière (11) et/ou sur un ou les deux côtés de la charnière (11) dans le matériau plastique plat, en particulier dans le matériau composite, une structure déformable (S1, S2) sous la forme de nombreuses fentes (a) et/ou ouvertures (b) est disposée dans le matériau en plastique plat, en particulier dans le matériau composite, créant ainsi au moins une zone d'étirement dans le matériau dans la direction (C) dans laquelle le volet d'airbag (1) est déplacé vers l'extérieur par le coussin d'airbag (7), **caractérisé en ce que** les fentes (a) ou ouvertures (b) sont des perforations, des découpes ou des découpes perforées.

2. Rabat d'airbag selon la revendication 1, **caractérisé en ce qu'**une structure en grille, en particulier une structure en losange, est créée par l'étirement de la structure de dégagement (S1, S2).

3. Rabat d'airbag selon la revendication 1 ou 2, **caractérisé en ce que** le rabat d'airbag (1) et la paroi de support du rabat (4) sont constitués d'un matériau composite comprenant au moins une couche de bandes ou de fibres en plastique, en particulier en polypropylène ou en polyester thermoplastique, et au moins une couche de plastique fondue sur celle-ci.

4. Rabat d'airbag selon la revendication 3, **caractérisé en ce que** les bandes ou fibres en plastique forment un tissu.
